# EUROPÄISCHE PATENTSCHRIFT

(11) **EP 1 036 822 B1**
(45) Veröffentlichungstag und Bekanntmachung des Hinweises auf die Patenterteilung: **11.12.2002**
(21) Anmeldenummer: 00104216.7
(22) Anmeldetag: 01.03.2000
(51) Int. Cl.: C09B 43/16, C09D 11/02

(54) **Wasserlösliche rote Säurefarbstoffe, ihre Herstellung und Verwendung**
Water-soluble red acid dyes, their preparation and use
Colorants acides rouges solubles dans l'eau, leur préparation et leur utilisation

(30) Priorität: 13.03.1999 DE 19911195
(43) Veröffentlichungstag der Anmeldung: 20.09.2000
(73) Patentinhaber: Clariant GmbH, 65929 Frankfurt am Main (DE)
(72) Erfinder: Bauer, Wolfgang Dr., 63477 Maintal (DE); Geisenberger, Josef Dr., 65843 Sulzbach (DE); Menzel, Heidemarie, 65812 Bad Soden (DE); Pedrazzi, Reinhard Dr., 4123 Allschwil (CH)

(56) Entgegenhaltungen:
- EP-A- 0 626 428
- DE-A- 3 918 653
- DATABASE WPI Section Ch, Week 198545 Derwent Publications Ltd., London, GB; Class E21, AN 1985-279283 XP002139566 & JP 60 188468 A (NIPPON KAYAKU KK), 25. September 1985 (1985-09-25)

## Beschreibung

Gegenstand der vorliegenden Erfindung sind wasserlösliche Säure-Farbstoffe, Verfahren zu ihrer Herstellung, ihre Verwendung zum Färben und Bedrucken von natürlichen und synthetischen Fasermaterialien sowie Aufzeichnungsflüssigkeiten, insbesondere für das Tintenstrahl- oder Ink-Jet-Verfahren, und Flüssigeinstellungen für die Papiermassefärbung, welche die erfindungsgemäßen Farbstoffe enthalten.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden.
Um Drucke hoher Schärfe und guter Auflösung zu erhalten, müssen die Aufzeichnungsflüssigkeiten sowie die darin enthaltenen Farbstoffe hohen Anforderungen genügen, insbesondere im Hinblick auf Reinheit, Partikelfreiheit, Löslichkeit, Lagerstabilität, Viskosität, Oberflächenspannung und Leitfähigkeit. Insbesondere werden sehr hohe Anforderungen an die Farbstärke, Farbton, Brillanz und Echtheitseigenschaften, wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet-Drucken mit photographischer Qualität. Um diese Eigenschaften zu erfüllen, werden teilweise Mischungen verschiedener Farbstoffe mit unterschiedlichen Eigenschaften verwendet. Dies ist z.B beschrieben in EP 0 825 233 A2 und US 5 188 664.

Die Entwicklung von wasserlöslichen Magenta-Farbstoffen, welche die gewünschten Kombination von Farbton, hoher Brillanz und Farbstärke, hoher Lichtechtheit und guter Wasserechtheit aufweisen, hat sich bisher als sehr schwierig erwiesen (s. beispielsweise P. Gregory, High-Technology Applications of Organic Colorants, Plenum Press, New York (1991), S. 197 - 201.

Wasserlösliche Reaktivfarbstoffe, welche zum Färben oder Bedrucken von Baumwollfasern eingesetzt werden können, sind bekannt. Außerdem können diese Farbstoffe auch zum Herstellen von Ink-Jet-Tinten für den Ink-Jet-Druck verwendet werden (Surface Coatings International 77, 36 - 41 (1994). Die bekannten Reaktivfarbstoffe weisen jedoch Nachteile bei der Herstellung von Aufzeichnungsflüssigkeiten für das Ink-Jet-Verfahren auf, insbesondere im Hinblick auf die Lagerstabilität von Tinten und Aufzeichnungsflüssigkeiten und Lichtechtheit der erhaltenen Drucke.

Aus den Dokumenten EP 0 626 428 A und JP 60-188468 ist bekannt, aus reaktiven triazingruppe-enthalten den Azofarbstoffen, die durch die Kupplung von einer 2-Aminonaphthalinsulfonsäure mit der 1-Amino-8-hydroxynaphthalin-3,6-disulfonsäure erhalten werden, die entsprechenden nicht-reaktiven Säurefarbstoffe herzustellen.

Es besteht somit ein Bedarf an wasserlöslichen Farbstoffen, welche den bereits bekannten Magenta-Farbstoffen insbesondere im Farbton, in der Lagerstabilität der Tinten und Wasserechtheit überlegen sind und gleichzeitig die weiteren für den Ink-Jet-Bereich geforderten Eigenschaften aufweisen.

Überraschenderweise wurde gefunden, daß die gestellten Anforderungen von nachstehend definierten, wasserlöslichen Säurefarbstoffen erfüllt werden.

Die vorliegende Erfindung betrifft Säurefarbstoffe der Formel (I) 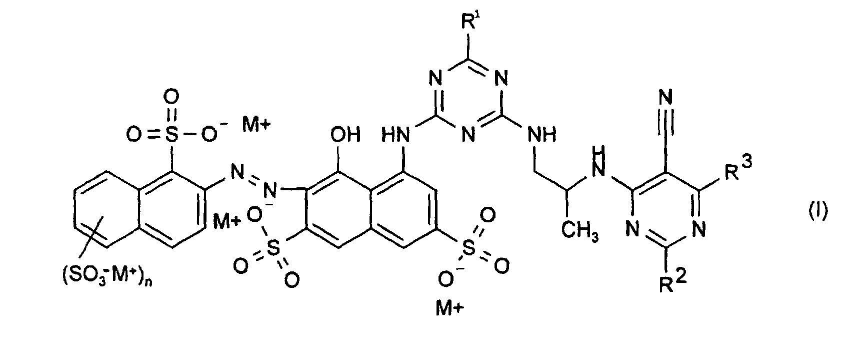 worin
- R¹, R² und R³: unabhängig voneinander für die Reste A-X-COOM, A-X-SO₃M, OR⁴ oder NR⁵R⁶,
- A: für NR⁷ oder S,
- X: für einen geradkettigen oder verzweigten (C₁-C₁₆)-Alkylen-Rest, für einen geradkettigen oder verzweigten, durch Hydroxy, Carboxy oder Amino substituierten (C₁-C₁₆)(C₁-C₁₆)-Alkylenrest, einen Arylenrest oder einen durch Hydroxy, Carboxy oder Sulfo substituierten Arylen-Rest;
- R⁴, R⁵ und R⁶: unabhängig voneinander für Wasserstoff, (C₁-C₄)-Alkyl oder für (C₁-C₄)-Alkyl, das durch einen oder mehrere, z.B. 2, 3 oder 4, Hydroxy-, 2-Hydroxyethoxy-,(C₁-C₄)-Alkoxy- oder AminoGruppen substituiert ist,
- R⁷: für Wasserstoff, Methyl oder Ethyl;
- M: für ein einwertiges Kation oder ein Äquivalent eines mehrwertigen Kations und
- n: für die Zahl 0 oder 1 stehen.

Bevorzugt sind Verbindungen der Formel (I), worin X für für einen geradkettigen oder verzweigten (C₁-C₆)-Alkylenrest, einen geradkettigen oder verzweigten, durch Hydroxy, Carboxy oder Amino substituierten (C₁-C₆)-Alkylenrest, einen Phenylenrest oder einen durch Hydroxy, Carboxy oder Sulfo substituierten Phenylenrest steht. Besonders bevorzugt steht X für einen (C₁-C₄)-Alkylen- oder Phenylenrest. X bedeutet beispielsweise Methylen, Ethylen, Ethan-1,1-diyl, Propan-1,1-diyl, 1,2-Propylen, 1,3-Propylen, 1,6-Hexylen, 2-Methylpropan-1,1-diyl, 3-Methylbutan-1,1-diyl, 2-Methylbutan-1,1-diyl, 2-Hydroxyethan-1,1-diyl, Propansäure-3,3-diyl, Butansäure-4,4-diyl, 5-Aminopentan-1,1-diyl, 3-Aminopropan-1,1-diyl oder 4-Aminobutan-1,1-diyl.

R⁴, R⁵ und R⁶ bedeuten beispielsweise Wasserstoff, Methyl, Ethyl, Hydroxymethyl, Hydroxyethyl, 2-Hydroxypropyl, 3-Hydroxypropyl, Methoxyethyl, Ethoxyethyl, wobei Wasserstoff, Hydroxyethyl und Hydroxypropyl bevorzugt sind.

R⁷ bedeutet vorzugsweise Wasserstoff.

M steht bevorzugt für Wasserstoff, ein Lithium-, Natrium-, Kalium- oder Ammoniumlon der Formel (II)

R⁸R⁹R¹⁰R¹¹N⁺ (II)

in der R⁸, R⁹, R¹⁰ und R¹¹ unabhängig voneinander Wasserstoff, unsubstituiertes (C₁-C₄)-Alkyl oder durch eine oder mehrere, z.B. 2, 3 oder 4, Hydroxy- oder 2-Hydroxyethoxy-Gruppen substituiertes (C₁-C₄)-Alkyl bedeuten. M steht darüberhinaus bevorzugt für eine Mischung der genannten Kationen.

In bevorzugten wasserlöslichen Säure-Farbstoffen der Formel (I) stehen die Reste R¹, R² und R³ unabhängig voneinander für A-X-COOM und A-X-SO₃M.
In besonders bevorzugten erfindungsgemäßen Farbstoffen der Formel (I) stehen die Reste R¹, R², und R³ für A-X-SO₃ M.

Die erfindungsgemäßen Säure-Farbstoffe der Formel (I) können beispielsweise dadurch hergestellt werden, daß man den Reaktiv-Farbstoff der allgemeinen Formel (III) 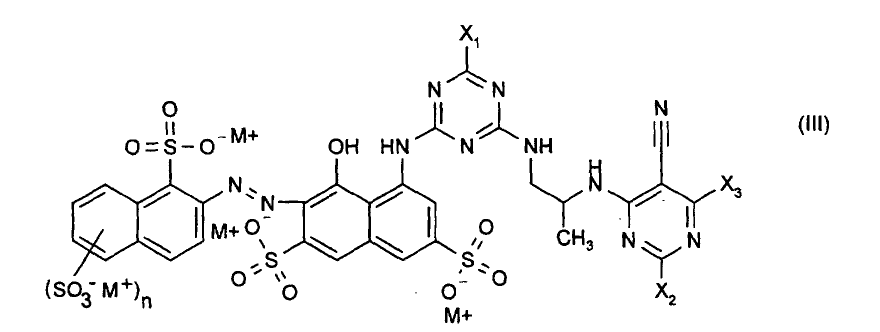 worin M und n die bereits genannte Bedeutung besitzt und X₁, X₂ und X₃ einem Halogenatom, bevorzugt einem Chloratom oder Bromatom entspricht, mit einer oder mehreren, z.B. 1, 2 oder 3, Verbindungen der Formel (IV), (V), (VI) und/ oder (VII) 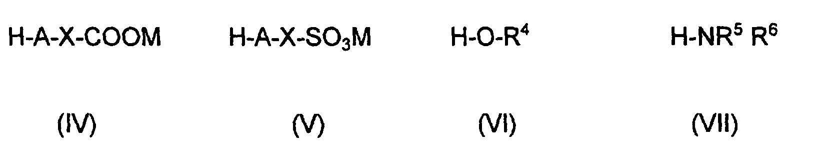 umsetzt.

Die Umsetzungen werden normalerweise im wäßrigen Medium bei pH-Werten von 3 bis 14, bevorzugt pH 7,5 bis 12, und Temperaturen von 10°C bis 100°C, bevorzugt 40 bis 80°C, durchgeführt. Pro Rest X₁ bis X₃ werden die Verbindungen der Formel (IV) - (VII) zweckmäßig in einer 1 bis 2,5 molaren Menge eingesetzt.

Die Verbindungen der Formel (III) können in an sich bekannter Weise,wie z.B. in DE-A-39 18 653 beschrieben, hergestellt werden.

Als Carbonsäuren der allgemeinen Formel (IV) können beispielsweise eingesetzt werden: Glycin, N-Methylglycin, 2-Aminopropionsäure, 3-Aminopropionsäure, 2-Aminobuttersäure, 3-Aminobuttersäure, 6-Aminohexancarbonsäure, Valin, Leucin, Isoleucin, Serin, Asparaginsäure, Glutaminsäure, Lysin, 1,3-Diaminobuttersäure, 1,4-Diaminopentancarbonsäure, 2-Aminobenzolcarbonsäure, 3-Aminobenzolcarbonsäure, 4-Aminobenzolcarbonsäure, 5-Aminobenzol-1,3-dicarbonsäure, Thioglykolsäure, 3-Mercaptopropancarbonsäure.

Als Sulfonsäuren der allgemeinen Formel (V) eignen sich beispielsweise: Aminomethansulfonsäure, Taurin, 2-Aminopropansulfonsäure, 3-Aminopropansulfonsäure, 2-Aminobenzolsulfonsäure, 3-Aminobenzolsulfonsäure, 4-Aminobenzolsulfonsäure, 3-Mercaptopropansulfonsäure und 4-Aminobenzol-1,3-disulfonsäure.

Als Hydroxyl-Verbindungen der Formel (VI) können beispielsweise Wasser, Methanol, Ethanol, Isopropanol, n-Butanol, Isobutanol, Glykol, Propylenglykol, Glykol-monomethylether, Glykol-monoethylether und Glykol-monobutylether eingesetzt werden.

Als Amine der Formel (VII) kommen beispielsweise Ammoniak, Methylamin, Ethylamin, Propylamin, Hexylamin, Ethanolamin, Diethanolamin, 2-Aminopropanol, 3-Aminopropanol, Di-propylamin, N-Methylethanol, 3-Dimethylaminopropylamin und 3-Diethylaminopropylamin in Betracht.

Die erfindungsgemäßen Säure-Farbstoffe der allgemeinen Formel (I) können aus den zunächst erhaltenen, bevorzugt wäßrigen Reaktionsgemischen durch übliche Aufarbeitungsmethoden, beispielsweise durch Aussalzen, Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet werden und die erfindungsgemäße Farbstoffe der allgemeinen Formel (I) enthaltende Reaktionsmischung durch Zusatz von organischen und/oder anorganischen Basen und/oder Feuchthaltemitteln und gegebenenfalls nach teilweiser oder vollständiger Entsalzung mittels Membranfiltration direkt in konzentrierte Farbstoff-Lösungen übergeführt werden.

Als anorganische Basen kommen beispielsweise Lithiumhydroxid, Lithiumcarbonat, Natriumhydroxid, Natriumhydrogencarbonat, Kaliumhydroxid, Kaliumcarbonat und Ammoniak in Betracht. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin und Polyethylenimin.

Feuchthaltemittel sind beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Gegenstand der vorliegenden Erfindung ist auch die Verwendung von wasserlöslichen Säure-Farbstoffen der allgemeinen Formel (I) zum Färben und Bedrucken von natürlichen und synthetischen Fasermaterialien, insbesondere zur Aufzeichnung von Schrift und Bildern auf verschiedenen Aufzeichnungsmedien, sowie zum Färben von Papier oder Zellstoffen in der Masse.

Beispielsweise sind die erfindungsgemäßen Säure-Farbstoffe der allgemeinen Formel (I) geeignet als Farbmittel in elektrophotographischen Tonern und Entwicklern, wie z.B. Einkomponenten- und Zweikomponentenpulvertonern, Magnettonern, Flüssigtonem, Polymerisationstonern sowie weiteren Spezialtonern.

Typische Tonerbindemittel sind Polymerisations- Polyadditions- und Polykondensationsharze, wie Styrol- Styrolacrylat-, Styrolbutadien-, Acrylat-, Polyester-, Phenol-Epoxidharze, Polysulfone, Polyurethane, einzelne oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.

Desweiteren sind die erfindungsgemäßen Säurefarbstoffe geeignet als Farbmittel in Pulver und Pulverlacken, insbesondere in triboelektrisch oder elektrokinetisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethane- und Acrylharze zusammen mit üblichen Härtern eingesetzt. Auch Kombinationen von Harzen finden Verwendung. So werden beispielsweise häufig Epoxidharze in Kombination mit, carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazolin und Dicarbonsäuren.

Außerdem sind die erfindungsgemäßen Säurefarbstoffe geeignet, als Farbmittel für Farbfilter, sowohl für die additive wie für die subtraktive Farberzeugung (Lit.: P. Gregory "Topics in Applied Chemistry: High Technology Applications of Organic Colorants" Plenum Press, New York 1991, Seite 15-25).

Die erfindungsgemäßen Farbstoffe eignen sich insbesondere zur Herstellung von Aufzeichnungsflüssigkeiten, insbesondere von Tinten auf wäßriger und nichtwäßriger Basis für das Tintenstrahl - oder Ink - Jet - Druckverfahren, sowie für solche Tinten, die nach dem Hot-melt Verfahren arbeiten bzw. auf Mikroemulsionen basieren, aber auch für sonstige Druck-, Vervielfältigungs-, Markierungs-, Schreib-, Zeichen-, Stempel- oder Registrierverfahren. Dabei werden rote Druckbilder von ausgezeichneter Qualität erhalten, die sich durch eine sehr gute Brillanz und Druckschärfe sowie durch eine gute Lichtechtheit, Abriebfestigkeit und Wasserechtheit auszeichnen.

Gegenstand der vorliegenden Erfindung sind auch Aufzeichnungsflüssigkeiten, die dadurch gekennzeichnet sind, daß sie eine oder mehrere der wasserlöslichen Säurefarbstoffe der Formel (I), ggf. zusammen mit anderen wasserlöslichen Farbstoffen zum Nuancieren, enthalten. Die genaue Zusammensetzung der Aufzeichnungsflüssigkeit muß dem beabsichtigten Verwendungszweck angepaßt werden.

Die fertigen Aufzeichnungsflüssigkeiten enthalten im allgemeinen insgesamt 0,5 bis 15 Gew.-% (trocken gerechnet) eines oder mehrerer, z.B. 2, 3 oder 4, Farbstoffe der allgemeinen Formel (I), 0 bis 99 Gew.-% Wasser und 0,5 bis 99,5 Gew.-% Lösungsmittel und/ oder Feuchthaltemittel. In einer bevorzugten Ausführungsform enthalten die fertigen Aufzeichnungsflüssigkeiten 0,5 bis 15 Gew.% Farbstoff, 35 bis 75 Gew.-% Wasser und 10 bis 50 Gew.-% Lösungsmittel und/ oder Feuchthaltemittel, in einer anderen bevorzugten Ausführungsform 0,5 bis 15 Gew.-% Farbstoffe, 0 bis 20 Gew.-% Wasser und 70 bis 99,5 Gew.-% Lösungsmittel und/oder Feuchthaltemittel. Die fertigen Aufzeichnungsflüssigkeiten können noch weitere, nachstehend erwähnte Zusätze enthalten.
Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösungsmitteln und/ oder Feuchthaltemitteln kann es sich um ein organisches Lösungsmittel oder um ein Gemisch derartiger Lösungsmittel handeln, wobei mit Wasser mischbare Lösungsmittel bevorzugt sind. Geeignete Lösungsmittel sind beispielsweise einoder mehrwertige Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei - oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyloder -butyl-ether, Triethylenglykol-mono-methyl- oder -ethyl-ether; Ketone und Ketonalkohole wie z. B. Aceton, Methylethylketon, Diethylketon, Methylisobutylketon, Methylpentylketon, Cyclopentanon, Cyclohexanon, Diacetonalkohol; Amide, wie z. B. Dimethylformamid, Dimethylacetamid, N-Methylpyrrolidon; ferner Harnstoff, Tetramethylharnstoff, Thiodiglykol.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z. B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Lichtechtheit, Wasserechtheit, Abriebfestigkeit und Auflösung.

Bei den Gehaltsangaben der folgenden Beispiele handelt es sich um Gewichtsprozente.

### Beispiel 1

15,9 g des Farbstoffs der folgenden Formel 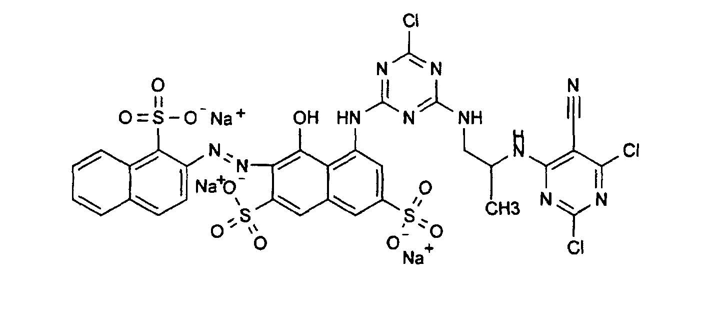 werden in 150 ml Wasser eingetragen und bei 20°C mit einer Lösung von 3,8 g Taurin in 10 ml Wasser versetzt. Anschließend wird das Reaktionsgemisch auf 60°C erwärmt und durch Zugabe von 4,4 ml einer 10 molaren NaOH-Lösung der pH-Wert bei 9,0 gehalten. Zur Vervollständigung der Reaktion rührt man 2 Stunden bei 95°C nach und kühlt die erhaltene Lösung mit dem roten Farbstoff der Formel 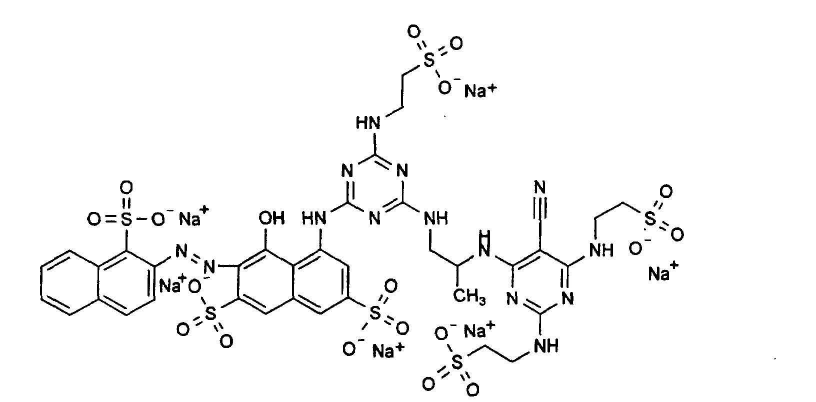 auf Raumtemperatur ab. Diese Farbstofflösung wird anschließend durch Membranfiltration entsalzt und getrocknet.
Ausbeute: 11,8 g rotes Pulver
Absorptionsspektrum in Wasser: λmax = 550 nm.

Der erhaltene Säure-Farbstoff eignet sich hervorragend zur Herstellung von Aufzeichnungsflüssigkeiten für das Ink-Jet-Verfahren, wobei brillante blaustichig-rote Druckbilder mit sehr guter Wasserechtheit und Lichtechtheit erhalten werden.

### Beispiel 2

Verfährt man nach den Angaben des Beispiels 1, setzt jedoch statt einer Lösung von 3,8 g Taurin in 10 ml Wasser 1,83 g Ethanolamin ein, so erhält man nach Entsalzung der zunächst erhaltenen Farbstofflösung und Sprühtrocknung 10,4 g eines roten Farbstoffs der Formel 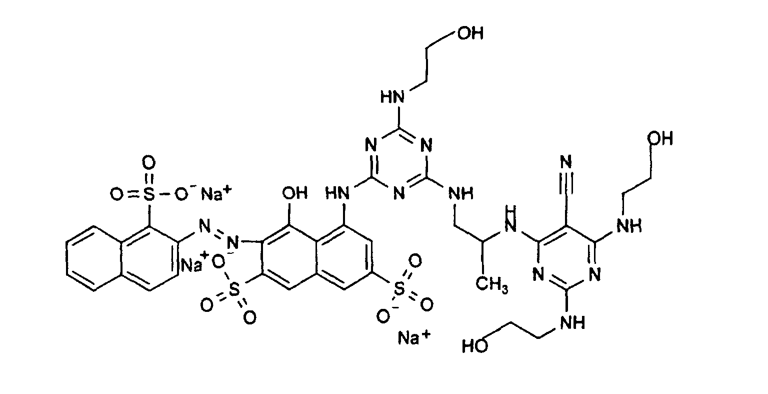 der sich hervorragend zur Herstellung von Aufzeichnungsflüssigkeiten für das Ink-Jet-Verfahren eignet.
Absorptionsmaximum in Wasser: λmax: 552 nm.

### Beispiel 3

1000 g der nach Beispiel 1 erhaltenen Farbstofflösung werden nach der Entsalzung mit 2,0 g eines handelsüblichen Konservierungsmittels, z.B. ®Mergal K 10 N, versetzt. Man erhält 602 g einer 10% igen, lagerstabilen Lösung des Farbstoffs, die sich hervorragend zur Herstellung von Tinten für das Ink-Jet-Verfahren eignet.

### Beispiel 4

Herstellung von Tinten von 2,5 % Reinfarbstoffgehalt:
2,5 g Reinfarbstoff gemäß Beispiel 1 werden unter Rühren bei 25°C in ein Gemisch von 20,0 g Diethylenglykol, 2,5 g N-Methylpyrrolidon, 1,0 g Triethanolamin und 76,4 g Wasser eingetragen und gelöst.

In der folgenden Tabelle sind weitere erfindungsgemäße Farbstoffe der Formel 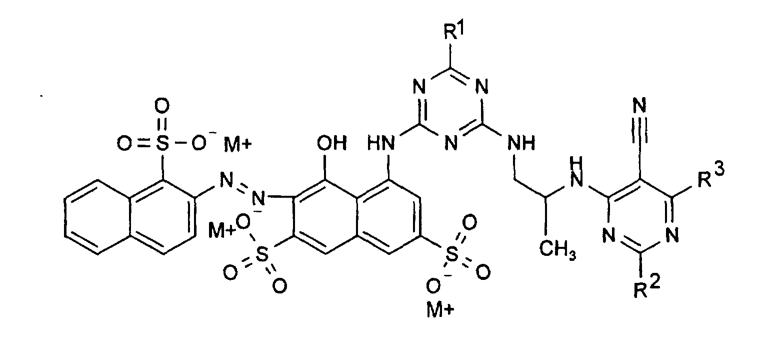 genannt, wobei in der Tabelle die Reste R¹, R², und R³, welche sich von den Verbindungen der Formel (IV) bis (VII) ableiten, das Kation M sowie das Absorptionsspektrum in Wasser aufgeführt sind.

| Bsp. | R¹ | R² | R³ | M⁺ | λₘₐₓ (nm) |
|---|---|---|---|---|---|
| 6 | SCH₂COO⁻ | SCH₂COO⁻ | SCH₂COO⁻ | Na | 553 |
| 7 | NHCH₂COO⁻ | NHCH₂COO⁻ | NHCH₂COO⁻ | Na | 550 |
| 8 | SCH₂CH₂CH₂SO₃⁻ | SCH₂CH₂CH₂SO₃⁻ | SCH₂CH₂CH₂SO₃⁻ | Na | 551 |
| 9 | NHCH₂CH₂SO₃⁻ | NHCH₂CH₂SO₃⁻ | NHCH₂CH₂SO₃⁻ | Na | 550 |
| 10 | NHCH₂CH₂OH | NHCH₂CH₂OH | NHCH₂CH₂OH | Na | 552 |
| 11 | NHCH₂CH₂CH₂N(CH₃)₂ | NHCH₂CH₂CH₂N(CH₃)₂ | NHCH₂CH₂CH₂N(CH₃)₂ | Na | 553 |
| 12 | OH | OH | OH | Na | 547 |

## Patentansprüche

1. Säurefarbstoff der Formel (I) 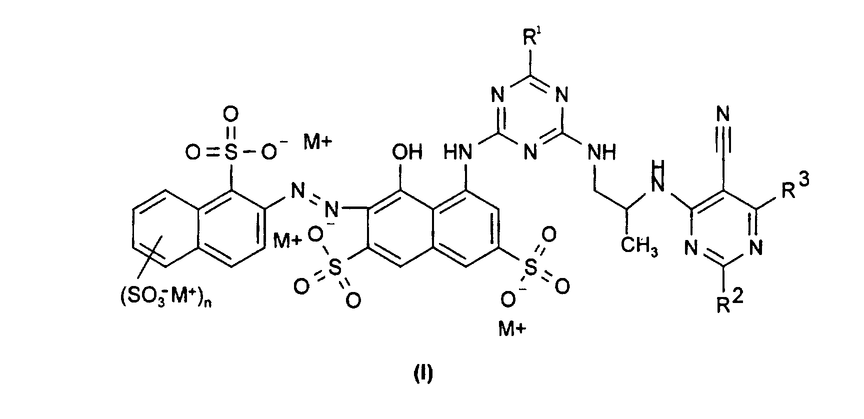 worin
R¹, R² und R³ unabhängig voneinander für die Reste A-X-COOM, A-X-SO₃M, OR⁴ oder N R⁵ R⁶,
A für N R⁷ oder S,
X für einen geradkettigen oder verzweigten (C₁-C₁₆)-Alkylen-Rest, für einen geradkettigen oder verzweigten, durch Hydroxy, Carboxy oder Amino substituierten (C₁-C₁₆)-Alkylenrest, einen Arylenrest oder einen durch Hydroxy, Carboxy oder Sulfo substituierten Arylen-Rest;
R⁴, R⁵ und R⁶ unabhängig voneinander für Wasserstoff, (C₁-C₄)-Alkyl oder für (C₁-C₄)-Alkyl, das durch einen oder mehrere Hydroxy- oder 2-Hydroxyethoxy-, (C₁-C₄)-Alkoxy- oder Amino - Gruppen substituiert ist,
R⁷ für Wasserstoff, Methyl oder Ethyl;
M für ein einwertiges Kation oder ein Äquivalent eines mehrwertigen Kations und
n für die Zahl 0 oder 1
stehen.

2. Säurefarbstoff nach Anspruch 1, **dadurch gekennzeichnet, daß** X für eine Alkylengruppe mit 1 bis 6 C-Atomen steht, die durch Hydroxy, Carboxy oder Amino substituiert sein kann.

3. Säurefarbstoff nach Anspruch 1 oder 2, **dadurch gekennzeichnet, daß** X für Phenylen steht, welches durch Hydroxy, Carboxy oder Sulfo substituiert sein kann.

4. Säurefarbstoff nach einem oder mehreren der Ansprüche 1 bis 3, **dadurch gekennzeichnet, daß** R⁴, R⁵ und R⁶ für Wasserstoff, Methyl, Ethyl, Hydroxymethyl, Hydroxyethyl, Hydroxypropyl, Methoxyethyl oder Ethoxyethyl stehen.

5. Säurefarbstoff nach einem oder mehreren der Ansprüche 1 bis 4, **dadurch gekennzeichnet, daß** M für ein Wasserstoff-, Lithium-, Natrium-, Kalium- oder ein Ammonium-Ion der allgemeinen Formel (II)
R⁸R⁹R¹⁰R¹¹N⁺ (II)
steht, in der
R⁸, R⁹, R¹⁰ und R¹¹ unabhängig voneinander Wasserstoff, unsubstituiertes (C₁-C₄)-Alkyl, oder eine durch eine oder mehrere Hydroxy- oder 2-Hydroxyethoxy-Gruppen substituiertes (C₁-C₄)-Alkyl bedeuten,
oder für eine Mischung der genannten Kationen steht.

6. Verfahren zur Herstellung von Säurefarbstoffen der Formel (I) nach einem oder mehreren der Ansprüche 1 bis 5, **dadurch gekennzeichnet, daß** man eine Verbindung der Formel (III) 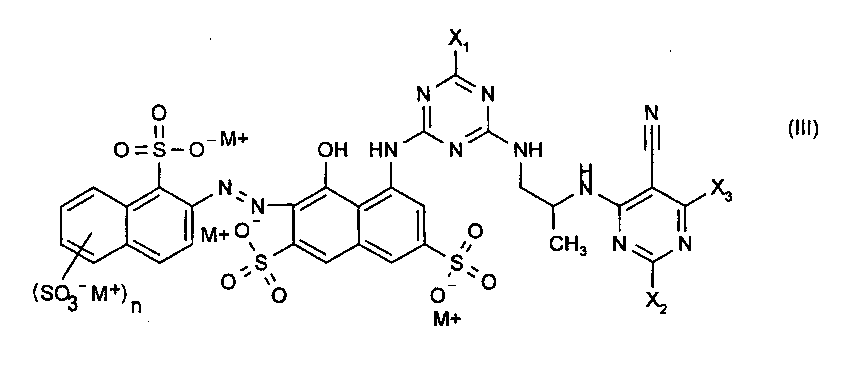 worin X₁, X₂ und X₃ ein Halogenatom bedeutet, mit einer oder mehreren Verbindungen der Formel (IV), (V), (VI) und/ oder (VII) 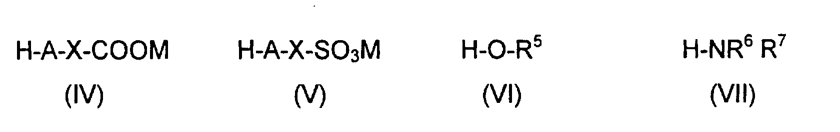 umsetzt.

7. Verwendung von Säurefarbstoffen der allgemeinen Formel (I) gemäß einem oder mehreren der Ansprüche 1 bis 5 zum Färben und Bedrucken von natürlichen oder synthetischen Fasermaterialien, zum Aufzeichnen von Schrift und Bildern auf einem Aufzeichnungsmaterial, zum Färben von Papier oder Zellstoffen in der Masse, oder als Farbmittel für elektrophotographische Toner und für Pulverlacke.

8. Aufzeichnungsflüssigkeit, **gekennzeichnet durch** einen Gehalt an einem oder mehreren Säurefarbstoffen der Formel (I) gemäß einem oder mehreren der Ansprüche 1 bis 5.

9. Aufzeichnungsflüssigkeit nach Anspruch 8, enthaltend 0,5 bis 15 Gew.-% eines oder mehrerer Säurefarbstoffe der Formel (I), 0 bis 99 Gew.-% Wasser und 0,5 bis 99,5 Gew.-% Lösungsmittel, Feuchthaltemittel oder eine Kombination davon.

10. Aufzeichnungsflüssigkeit nach Anspruch 8, enthaltend 0,5 bis 15 Gew.-% eines oder mehrerer Säurefarbstoffe der Formel (I), 35 bis 75 Gew.-% Wasser und 10 bis 50 Gew.-% Lösungsmittel, Feuchthaltemittel oder eine Kombination davon.

11. Aufzeichnungsflüssigkeit nach Anspruch 8, enthaltend 0,5 bis 15 Gew.-% eines oder mehrerer Säurefarbstoffe der Formel (I), 0 bis 20 Gew.-% Wasser und 70 bis 99,5 Gew.-% Lösungsmittel, Feuchthaltemittel oder eine Kombination davon.

## Claims

1. An acid dye of the formula (I) 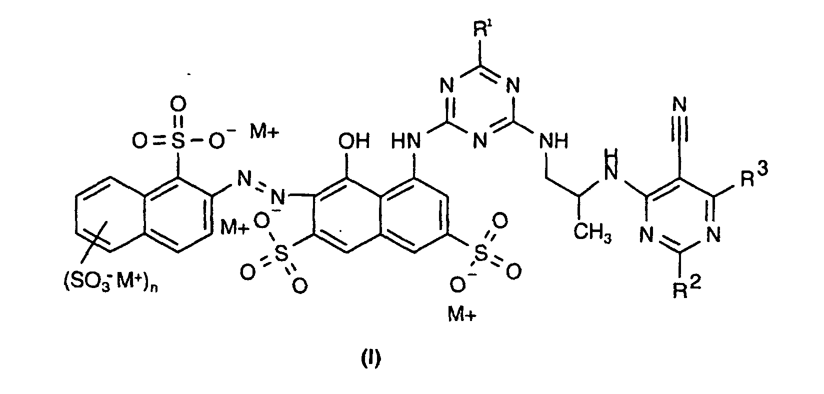 in which
R¹, R² and R³ independently of one another are A-X-COOM, A-X-SO₃M, OR⁴ or NR⁵R⁶,
A is NR⁷ or S,
X is a straight-chain or branched (C₁-C₁₆)-alkylene radical, a straight-chain or branched, hydroxyl-, carboxyl- or amino-substituted (C₁-C₁₆)-alkylene radical, an arylene radical or a hydroxyl-, carboxyl- or sulfo-substituted arylene radical;
R⁴, R⁵ and R⁶ independently of one another are hydrogen or (C₁-C₄)-alkyl or are (C₁-C₄)-alkyl substituted by one or more hydroxyl, 2-hydroxyethoxy, (C₁-C₄)-alkoxy or amino groups,
R⁷ is hydrogen, methyl or ethyl;
M is a monovalent cation or one equivalent of a polyvalent cation, and
n is 0 or 1.

2. An acid dye as claimed in claim 1, wherein X is an alkylene group of 1 to 6 carbon atoms which can be substituted by hydroxyl, carboxyl or amino.

3. An acid dye as claimed in claim 1 or 2, wherein X is phenylene which can be substituted by hydroxyl, carboxyl or sulfo.

4. An acid dye as claimed in one or more of claims 1 to 3, wherein R⁴, R⁵ and R⁶ are hydrogen, methyl, ethyl, hydroxymethyl, hydroxyethyl, hydroxypropyl, methoxyethyl or ethoxyethyl.

5. An acid dye as claimed in one or more of claims 1 to 4, wherein M is a hydrogen, lithium, sodium or potassium ion or an ammonium ion of the formula (II)
R⁸R⁹R¹⁰R¹¹N⁺ (II)
in which
R⁸, R⁹, R¹⁰ and R¹¹ independently of one another are hydrogen, unsubstituted (C₁-C₄)-alkyl, or a (C₁-C₄)-alkyl substituted by one or more hydroxyl or 2-hydroxyethoxy groups,
or is a mixture of said cations.

6. A process for preparing an acid dye of the formula (I) as claimed in one or more of claims 1 to 5, which comprises reacting a compound of the formula (III) 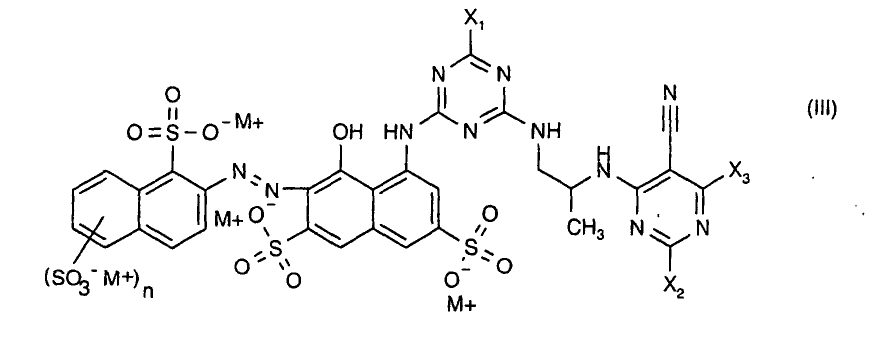 in which X₁, X₂ and X₃ are a halogen atom with one or more compounds of the formulae (IV), (V), (VI) and/or (VII)

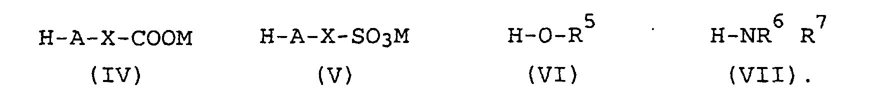

7. The use of an acid dye of the formula (I) as claimed in one or more of claims 1 to 5 for dyeing and printing natural or synthetic fiber materials, for recording text and images on a recording material, for pulp-dyeing paper or pulps, or as a colorant for electrophotographic toners or for powder coating materials.

8. A recording liquid comprising one or more acid dyes of the formula (I) as claimed in one or more of claims 1 to 5.

9. A recording liquid as claimed in claim 8, containing from 0.5 to 15% by weight of one or more acid dyes of the formula (I), from 0 to 99% by weight of water and from 0.5 to 99.5% by weight of solvents, humectants or a combination thereof.

10. A recording liquid as claimed in claim 8, containing from 0.5 to 15% by weight of one or more acid dyes of the formula (I), from 35 to 75% by weight humectants or a combination thereof.

11. A recording liquid as claimed in claim 8, containing from 0.5 to 15% by weight of one or more acid dyes of the formula (I), from 0 to 20% by weight of water and from 70 to 99.5% by weight of solvents, humectants or a combination thereof.

## Revendications

1. Colorant acide de formule (I) 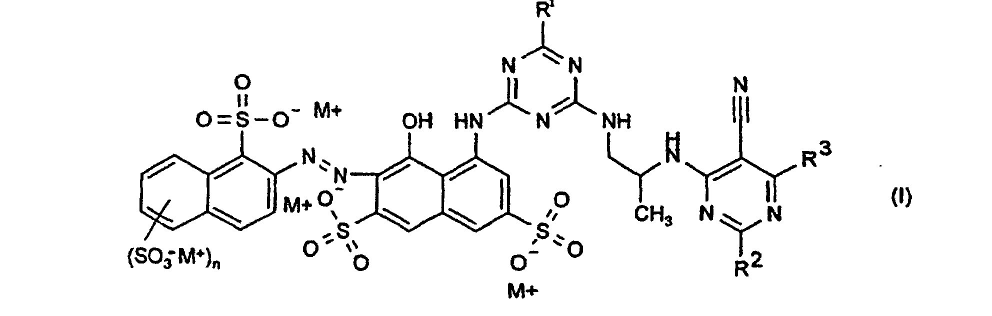 dans laquelle
R¹, R² et R³ représentent indépendamment les uns des autres les radicaux A-X-COOM, A-X-SO₃M, OR⁴ ou NR⁵R⁶,
A représente NR⁷ ou S,
X représente un radical alkylène en C₁-C₁₆ à chaîne droite ou ramifiée, un radical alkylène en C₁-C₁₆ à chaîne droite ou ramifiée, substitué par le groupe hydroxy, carboxy ou amino, un radical arylène ou un radical arylène substitué par le groupe hydroxy, carboxy ou sulfo ;
R⁴, R⁵ et R⁶ représentent, indépendamment les uns des autres, un atome d'hydrogène ou un radical alkyle en C₁-C₄ ou un radical alkyle en C₁-C₄ qui est substitué par un ou plusieurs groupes hydroxy ou 2-hydroxyéthoxy, alcoxy en C₁-C₄ ou amino,
R⁷ représente un atome d'hydrogène, le groupe méthyle ou éthyle ;
M représente un cation monovalent ou un équivalent d'un cation plurivalent et
n représente le nombre 0 ou 1.

2. Colorant acide selon la revendication 1, **caractérisé en ce que** X représente un groupe alkylène ayant de 1 à 6 atomes de carbone, qui peut être substitué par le groupe hydroxy, carboxy ou amino.

3. Colorant acide selon la revendication 1 ou 2, **caractérisé en ce que** X représente un groupe phénylène qui peut être substitué par le groupe hydroxy, carboxy ou sulfo.

4. Colorant acide selon une ou plusieurs des revendications 1 à 3, **caractérisé en ce que** R⁴, R⁵ et R⁶ représentent un atome d'hydrogène, le groupe méthyle, éthyle, hydroxyméthyle, hydroxyéthyle, hydroxypropyle, méthoxyéthyle ou éthoxyéthyle.

5. Colorant acide selon une ou plusieurs des revendications 1 à 4, **caractérisé en ce que** M représente un atome d'hydrogène, l'ion lithium, sodium, potassium ou un ion ammonium de formule générale (II)
R⁸R⁹R¹⁰R¹¹N⁺ (II)
dans laquelle
R⁸, R⁹, R¹⁰ et R¹¹ représentent, indépendamment les uns des autres, un atome d'hydrogène, un groupe alkyle en C₁-C₄ non substitué ou un groupe alkyle en C₁-C₄ substitué par un ou plusieurs groupes hydroxy ou 2-hydroxyéthoxy,
ou un mélange des cations cités.

6. Procédé pour la préparation des colorants acides de formule (I) selon une ou plusieurs des revendications 1 à 5, **caractérisé en ce qu'**on fait réagir un composé de formule (III) 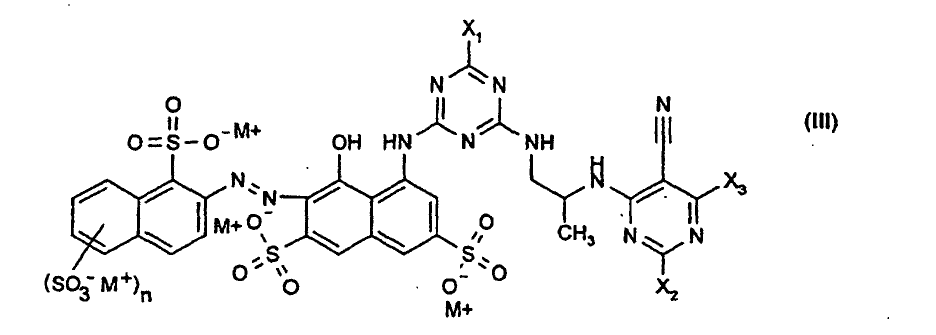 dans laquelle X₁, X₂ et X₃ représentent un atome d'halogène, avec un ou plusieurs composés de formule (IV), (V), (VI) et/ou (VII)

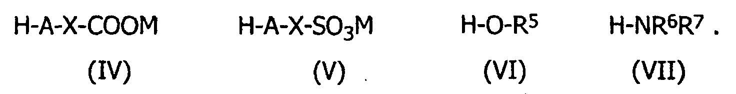

7. Utilisation des colorants acides de formule générale (I) selon une ou plusieurs des revendications 1 à 5, pour la teinture et l'impression de matériaux fibreux naturels ou synthétiques, pour l'enregistrement d'écriture et d'images sur un matériau d'enregistrement, pour la coloration dans la masse du papier ou de matières cellulosiques, ou en tant que colorant pour toners électrophotographiques et pour peintures en poudre.

8. Liquide d'enregistrement, **caractérisé par** une teneur en un ou plusieurs colorants acides de formule (I) selon une ou plusieurs des revendications 1 à 5.

9. Liquide d'enregistrement selon la revendication 8, contenant de 0,5 à 15 % en poids d'un ou plusieurs colorants acides de formule (I), de 0 à 99 % en poids d'eau et de 0,5 à 99,5 % en poids de solvant, d'humectant ou d'une association de ceux-ci.

10. Liquide d'enregistrement selon la revendication 8, contenant de 0,5 à 15 % en poids d'un ou plusieurs colorants acides de formule (I), de 35 à 75% en poids d'eau et de 10 à 50% en poids de solvant, d'humectant ou d'une association de ceux-ci.

11. Liquide d'enregistrement selon la revendication 8, contenant de 0,5 à 15 % en poids d'un ou plusieurs colorants acides de formule (I), de 0 à 20 % en poids d'eau et de 70 à 99,5 % en poids de solvant, d'humectant ou d'une association de ceux-ci.
